# EUROPÄISCHE PATENTANMELDUNG

(11) **EP 0 844 163 A2**
(43) Veröffentlichungstag der Anmeldung: **27.05.1998**
(21) Anmeldenummer: 97119621.7
(22) Anmeldetag: 10.11.1997
(51) Int. Cl.: B62D 1/10, F16D 1/09

(54) **Befestigungsvorrichtung zur Arretierung eines Fahrzeuglenkrades an einer Lenkwelle**

(30) Priorität: 22.11.1996 DE 29620375 U
(71) Anmelder: TRW Occupant Restraint Systems GmbH, 73551 Alfdorf (DE)
(72) Erfinder: Heilig, Alexander, 73550 Wissgoldingen (DE)
(74) Vertreter: Kitzhofer, Thomas, Dipl.-Ing.

(57) **Zusammenfassung**

Eine Befestigungsvorrichtung zur Arretierung einer Nabe (12) eines Fahrzeuglenkrads an einem Ende einer Lenkwelle (14), mit einer drehfesten Welle/Nabe-Verbindung zwischen der Nabe (12) und dem Ende der Lenkwelle (14) und mit einem ringförmigen Federelement (28), welches eine in der Richtung der Längsachse der Lenkwelle (14) wirksame Formschlußverbindung zwischen der Nabe (12) und der Lenkwelle (14) bildet, wobei die Lenkwelle (14) einen Absatz aufweist, dessen dem Lenkrad abgewandte Stirnfläche in einen kleineren Wellendurchmesser übergeht, ist dadurch gekennzeichnet, daß das Federelement (28) einen gegenüber dem Außendurchmesser des Absatzes kleineren Innendurchmesser aufweist, wenigstens auf einem Teil seiner axialen Länge radial nachgiebig ist und zusammen mit der Nabe (12) auf die Lenkwelle (14) gestülpt werden kann und den Absatz hintergreift.

## Beschreibung

Die Erfindung betrifft eine Befestigungsvorrichtung zur Arretierung einer Nabe eines Fahrzeuglenkrades an einem Ende einer Lenkwelle, mit einer drehfesten Welle/Nabe-Verbindung zwischen der Nabe und dem Ende der Lenkwelle und mit einem ringförmigen Federelement, welches eine in der Richtung der Längsachse der Lenkwelle wirksame Formschlußverbindung zwischen der Nabe und der Lenkwelle bildet, wobei die Lenkwelle einen Absatz aufweist, dessen dem Lenkrad abgewandte Stirnfläche in einen kleineren Wellendurchmesser übergeht.

Eine gattungsgemäße Befestigungsvorrichtung ist aus der DE 295 16 626 bekannt. Dabei ist das Federelement als Überwurfmutter ausgebildet, die drehbar, aber axial gesichert auf der Lenkwelle angebracht und auf ein Außengewinde auf der Nabe aufgeschraubt werden kann. Durch diese Befestigungsvorrichtung wird ein unbeabsichtigtes Lösen der Verbindung zwischen Lenkwelle und Nabe verhindert.

Die Erfindung schafft eine Befestigungsvorrichtung, mittels der die Arretierung des Fahrzeuglenkrads an einer Lenkwelle noch schneller und einfacher erfolgen kann als bei der bisher bekannten, ohne daß das Risiko eines Lösens der Verbindung besteht. Zudem wird ein Spiel zwischen dem Lenkrad und der Lenkwelle in axialer oder Umfangsrichtung ausgeschlossen. Durch die erfindungsgemäße Befestigungsvorrichtung können insbesondere solche Fahrzeuglenkräder sehr einfach montiert werden, in die bereits ein Gassack-Rückhaltesystem montiert ist. Dies wird bei einer Befestigungsvorrichtung der eingangs genannten Art dadurch erreicht, daß das Federelement einen gegenüber dem Außendurchmesser des Absatzes kleineren Innendurchmesser aufweist, wenigstens auf einem Teil seiner axialen Länge radial nachgiebig ist und zusammen mit der Nabe auf die Lenkwelle gestülpt werden kann und den Absatz hintergreift. Die erfindungsgemäße Befestigungsvorrichtung ist als Schnapp-Verbindung ausgebildet. Der eigentliche Montagevorgang der Lenkwelle besteht damit im wesentlichen nur noch im Aufstecken der Lenkradnabe auf die Lenkwelle.

Eine dem Lenkrad abgewandte Stirnfläche des Absatzes ist vorzugsweise als Kegelfläche, im folgenden rückseitige Kegelfläche genannt, ausgebildet. Das Federelement liegt mit einer an ihm vorgesehenen Kegelfläche an der rückseitigen Kegelfläche radial vorgespannt an und erzeugt dadurch eine axiale Kraft. Zur Vermeidung eines axialen Spiels weist die Welle zusätzlich eine dem Lenkrad zugewandte, vorderseitige Kegelfläche und die Nabe eine kegelige Aufnahme auf, gegen deren Innenfläche die vorderseitige Kegelfläche durch das Federelement gedrückt wird. An der rückseitigen Kegelfläche wird durch das Federelement die axiale Kraft erzeugt, die notwendig ist, um die Innenfläche gegen die vorderseitige Kegelfläche zu drücken und die Nabe auf der Lenkwelle in axialer, radialer und Umfangsrichtung zu sichern.

Gemäß einer ersten Ausführungsform ist das Federelement als geschlitzter Ring ausgebildet, der in einer innenseitigen Umfangsnut in der Nabe aufgenommen ist. Die durch das Federelement hervorgerufene axiale Kraft wird dadurch in die Nabe eingeleitet.

Eine zweite Ausführungsform sieht vor, daß das Federelement nicht als separates Teil ausgeführt ist, sondern einstückig mit der Nabe verbunden ist, indem ein Aufnahmeende der Nabe, mit dem die Nabe auf die Lenkwelle gesteckt wird, als Federelement ausgebildet ist. Die Nabe weist am Aufnahmeende wenigstens einen radial durchgehenden Schlitz zur Erzeugung der radialen Nachgiebigkeit auf.

Zusätzlich ist es jedoch vorteilhaft, wenn an einem der äußeren Mantelfläche der Habe im Bereich des dem Lenkrad abgewandten Ende ein Sicherungselement vorgesehen ist. Dieses ist so ausgebildet, daß es eine radial nach innen gerichtete Kraft erzeugt und ein gewaltsames Abziehen des Lenkrads von der Lenkwelle verhindert.

Das Sicherungselement kann als Drehring mit einer nicht kreiszylindrischen Innenoberfläche ausgeführt sein. Das Federelement besitzt ebenfalls eine nicht kreiszylindrische äußere Mantelfläche, die so ausgebildet ist, daß durch Drehen des Sicherungselements die radial nach innen gerichtete Kraft erzeugt werden kann.

Ferner kann das Sicherungselement auch als Schelle oder als axial verschiebbarer Ring ausgebildet sein.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Fig. 1 eine Längsschnittansicht der Lenkwelle mit einer durch die erfindungsgemäße Befestigungsvorrichtung gemäß einer ersten Ausführungsform daran befestigten Lenkradnabe;
- Fig. 2 eine Querschnittsansicht der Lenkwelle und der Nabe nach Fig. 1;
- Fig. 3a eine Schnittansicht längs der Linie III-III in Fig. 1;
- Fig. 3b eine vergrößerte Ansicht des in Fig. 3a mit X gekennzeichneten Bereichs;
- Fig. 4 eine perspektivische Ansicht der in Fig. 1 dargestellten Nabe des Fabrzeuglenkrades;
- Fig. 5 eine Lenkwelle und eine Nabe, die durch die erfindungsgemäße Befestigungsvorrichtung nach einer zweiten Ausführungsform miteinander verbunden werden;
- Fig. 6 eine Lenkwelle und eine Nabe, die durch die erfindungsgemäße Befestigungsvorrichtung gemäß einer dritten Ausführungsform miteinander verbunden werden;
- Fig. 7 eine Lenkwelle und eine Nabe, die durch die erfindungsgemäße Befestigungsvorrichtung gemäß einer vierten Ausführungsform miteinander verbunden werden; und
- Fig. 8 eine Lenkwelle und eine Nabe, die durch die erfindungsgemäße Befestigungsvorrichtung gemäß einer fünften Ausführungsform miteinander verbunden werden.

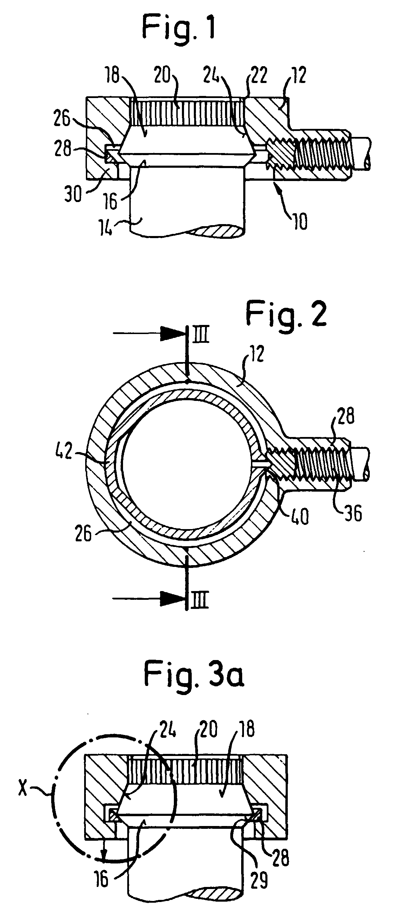

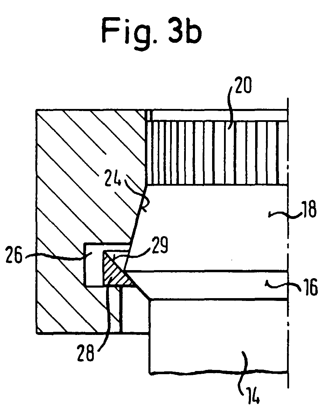

In Fig. 1 ist eine erste Ausführungsform einer Befestigungsvorrichtung 10 zur Arretierung einer Nabe 12 eines Fabrzeuglenkrads (nicht vollständig gezeigt) an einem Ende einer Lenkwelle 14 dargestellt. Die Lenkwelle 14 weist im Bereich ihres Endes einen Absatz auf. Dieser ist durch eine rückseitige Kegelfläche 16, die dem Lenkrad abgewandt ist, und eine vorderseitige Kegelfläche 18, die dem Lenkrad zugewandt ist, definiert. Der Kegelwinkel der rückseitigen Kegelfläche 16 ist dabei deutlich größer als der der vorderseitigen Kegelfläche 18. An die vorderseitige Kegelfläche 18 schließt sich unmittelbar ein Keilwellenprofil 20 an, das in ein entsprechendes Keilnabenprofil 22 in der Nabe 12 eingreift, so daß die Nabe 12 drehmomentfest mit der Lenkwelle 14 verbunden ist. Im Bereich der vorderseitigen Kegelfläche 18 weist die Nabe 12 eine entsprechende kegelige Aufnahme mit einer Innenfläche 24 auf, die an der Kegelfläche 18 anliegt. Im Bereich des größten Durchmessers des Absatzes ist auf der Innenseite der Nabe 12 eine Umfangsnut 26 vorgesehen, in der ein als geschlitzter Ring ausgebildetes Federelement 28 aufgenommen ist. Das Federelement 28 hat eine dreieckige Querschnittsform mit einer zur Kegelfläche 18 parallelen, schrägen Kegelfläche 29. Der Innendurchmesser des Federelements 28 ist kleiner als der Außendurchmesser des Absatzes auf der Lenkwelle 14. Ein sich an die Nut 26 anschließender Bund 30 der Nabe 12 weist einen Innendurchmesser auf, der geringfügig kleiner als der Außendurchmesser des Absatzes ist, so daß die Nabe 12 zusammen mit dem radial nachgiebigen Federelement 28 auf das Ende der Lenkwelle 14 aufgesteckt werden kann, wobei das eine Schnapp-Verbindung bildende Federelement 28 in der in Fig. 1 gezeigten, verriegelten Stellung den Absatz hintergreift. Wie den Figuren 3a und 3b zu entnehmen ist, liegt die Kegelfläche 29 in montiertem Zustand des Lenkrads an der rückseitigen Kegelfläche 16 vorgespannt an. Durch das Federelement 28 wird in der verriegelten Stellung dadurch eine axiale Kraft erzeugt, die die Nabe 12 in Pfeilrichtung gemäß Fig. 3a auf die Lenkwelle 14 drückt. Die Innenfläche 24 liegt an der vorderseitigen Kegelfläche 18 an, so daß die Lenkwelle 14 nicht nur durch die Keilwellen/Keilnaben-Verbindung, sondern auch durch einen Kegelsitz mit der Nabe 12 verbunden ist. Der Kegelsitz in Verbindung mit dem Federelement 28, dessen axiale Kräfte über die Wände der Nut 26 in die Nabe 12 eingeleitet werden, erzeugt auch einen spielfreien axialen Sitz der Nabe 12 auf der Lenkwelle 14.

Die radial nach innen gerichtete Kraft des Federelements 28 kann durch Vorsehen einer Sicherungsschraube 36 noch erhöht werden. Die Sicherungsschraube 36 ist in ein Innengewinde in einem rohrförmigen, radialen Fortsatz 38 der Nabe 12 eingedreht und durch eine konisch ausgehöhlte Stirnseite gekennzeichnet. An den Umfangsenden des Federelements 28 sind radial nach außen vorstehende Fortsätze 40 vorgesehen, die zusammen eine Konusform aufweisen, welche auf die ausgehöhlte Stirnseite der Sicherungsschraube 36 abgestimmt ist. Durch Eindrehen der Sicherungsschraube 36 werden die Fortsätze 40 in Umfangsrichtung aufeinander zu bewegt, wodurch sich der Innendurchmesser des Federelements 28 verringert. Auf der den Fortsätzen 40 diametral gegenüberliegenden Seite stützt sich das Federelement 28 mit einer Ausbuchtung 42 an der Nut 26 ab.

Zur Befestigung des Lenkrads auf der Lenkwelle 14 muß die Nabe 12 lediglich auf das Ende der Lenkwelle 14 gesteckt und anschließend die Sicherungsschraube 36 eingedreht werden.

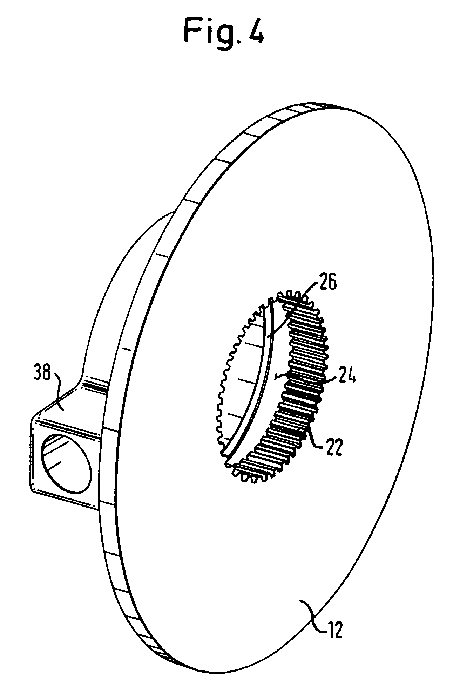

In Fig. 4 ist die Nabe 12 ohne das Federelement 28 perspektivisch dargestellt.

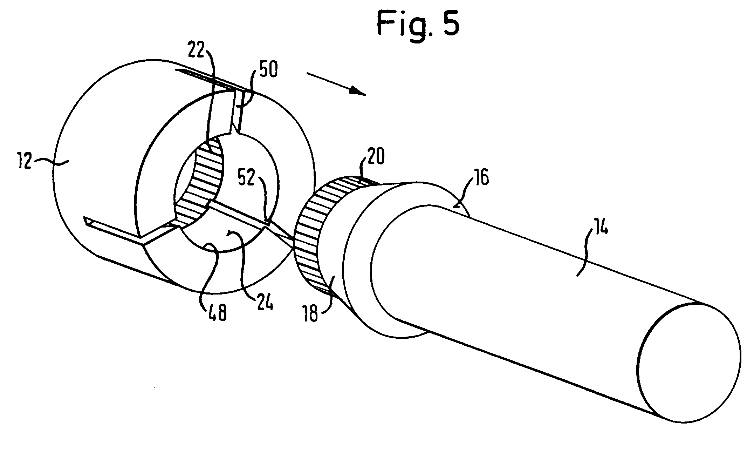

Auch bei den weiteren Ausführungsformen der Befestigungsvorrichtung ist diese als einfach montierbare Schnapp-Verbindung ausgeführt. Bei der in Fig. 5 dargestellten zweiten Ausführungsform der Befestigungsvorrichtung unterscheidet sich die Lenkwelle 14 nicht von der in den Figuren 1 bis 3 gezeigten Lenkwelle 14. Das Federelement 28 ist nicht als separates Teil ausgeführt, sondern das Aufnahmeende der Nabe 12, mit der die Nabe 12 auf die Lenkwelle 14 gesteckt ist, ist als Federelement ausgebildet, indem sich an die Innenfläche 24 ein radial nach innen ragender Bund 48 anschließt, der eine in montiertem Zustand des Lenkrades an der Kegelfläche 16 anliegende Kegelfläche 52 aufweist. Mehrere radial durchgehende Schlitze 50 in der Nabe 12 verleihen dem Aufnahmeende eine radiale Nachgiebigkeit. Die Innenseite der Nabe 12 ist ebenso wie bei der in den Figuren 1 bis 3 dargestellten Ausführungsform mit einem Keilnabenprofil 22 und der sich daran anschließenden Innenfläche 24 versehen. Das Lenkrad wird mit seiner Nabe 12 in Pfeilrichtung auf das Ende der Lenkwelle 14 gesteckt. Der Bund 48 gleitet dabei an der Kegelfläche 18 entlang, wodurch die Nabe 12 in radialer Richtung aufgespreizt wird, bis der Bund 48 schließlich die rückseitige Kegelfläche 16 erreicht hat und sich an sie preßt. Die radiale Kraft hat aufgrund der Kegelfläche 16 eine axiale Kraftkomponente, durch die die Nabe 12 in axialer und Umfangsrichtung spielfrei auf der Lenkwelle 14 gehalten ist.

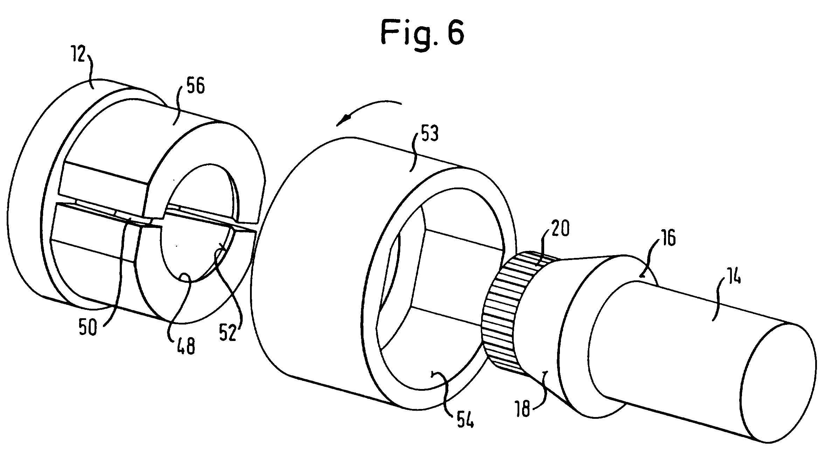

Die in Fig. 6 dargestellte Ausführungsform unterscheidet sich von der in Fig. 5 dargestellten dadurch, daß ein zusätzliches Sicherungselement vorgesehen ist, welches ein Abziehen der Nabe 12 von der Welle 14 verhindert, indem es auf die Nabe 12 im Bereich des geschlitzen Aufnahmeendes eine radial nach innen gerichete Kraft ausübt. Das Sicherungselement ist als Drehring 53 ausgeführt, der eine nicht kreiszylindrische, sondern im Querschnitt ovale Innenoberfläche 54 aufweist. Das Aufnahmeende der Nabe 12 weist ebenfalls eine nicht kreiszylindrische, sondern im Querschnitt ovale äußere Mantelfläche 56 auf. Zum Montieren wird der Drehring 53 über die Mantelfläche 56 geschoben und die Nabe 12 zusammen mit dem Drehring 53 auf die Lenkwelle 14 gesteckt. Anschließend wird durch Drehen des Ringes 53 auf das Aufnahmeende der Nabe 12 eine radial nach innen gerichtete Kraft erzeugt, so daß die Kegelfläche 52 im Bereich des das Federelement bildenden Bundes 48 noch fester gegen die rückseitige Kegelfläche 16 gepreßt wird.

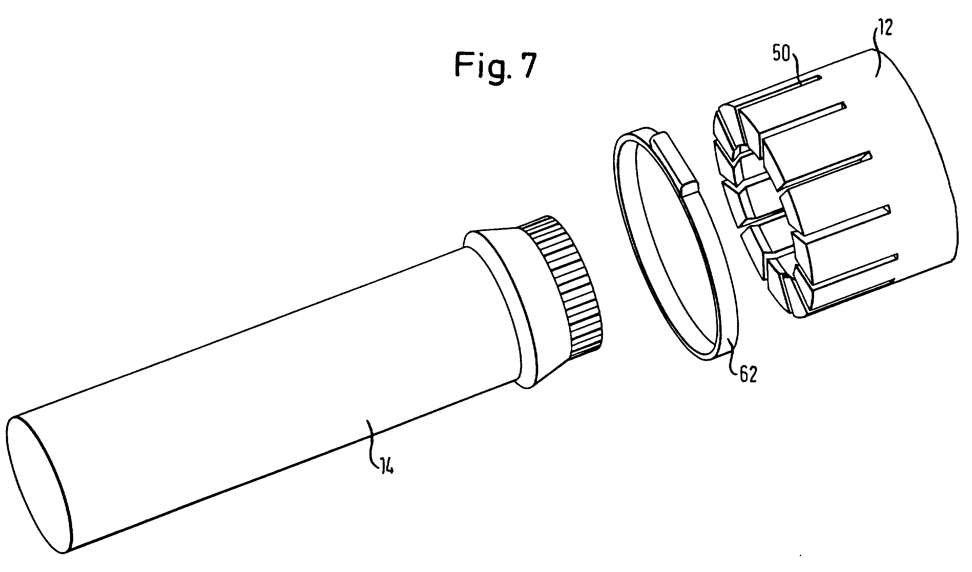

Anstatt des Drehringes 53 kann auch eine Schelle 62, z.B. in Form einer Art Schlauchschelle, wie sie in Fig. 7 gezeigt ist, verwendet werden, die auf das geschlitzte Aufnahmeende der Nabe 12 gesteckt und nach Montage der Nabe 12 angezogen wird.

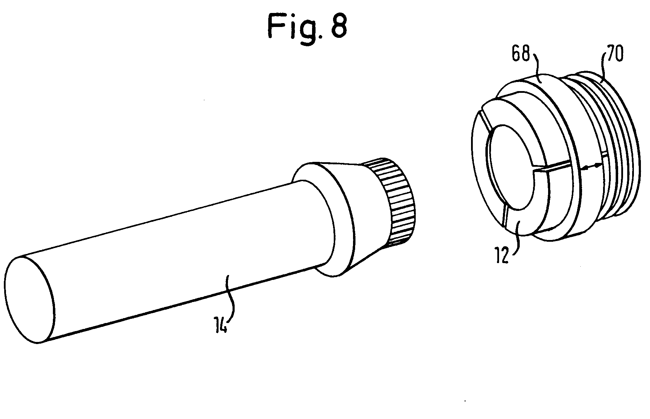

In der in Fig. 8 gezeigten fünften Ausführungsform der Befestigungsvorrichtung ist das Sicherungselement als ein auf der äußeren Mantelfläche der Nabe 12 axial verschiebbarer Ring 68 ausgebildet. Zwischen dem Ring 68 und einem nicht gezeigten Anschlag an der Rückseite des Lenkrades ist ein Vorspannelement in Form einer Feder 70 auf die Nabe geschoben. Die Feder 70 schiebt den Ring 68 in Richtung zum Ende der Nabe 12. Da sich die äußere Mantelfläche der Nabe 12 zum Aufnahmeende hin geringfügig konisch aufweitet, kann der Ring 68 nicht von der Nabe 12 gleiten. Zum Montieren des Lenkrads wird der Ring 68 gegen die Kraft der Feder 70 geringfügig in Richtung Lenkrad geschoben, und anschließend wird die Nabe 12 auf die Lenkwelle 14 gesteckt, wobei sich die Nabe 12 geringfügig radial aufweitet. Nach dem Aufstecken der Nabe 12 kann der Ring 68 wieder losgelassen werden, so daß er sich aufgrund der Feder 70 zum Aufnahmeende hin axial verschiebt, bis er auf der konischen äußeren Mantelfläche klemmt. Dabei wird eine radial nach innen gerichtete Kraft auf die Nabe 12 ausgeübt, die die Nabe 12 noch sicherer auf der Lenkwelle 14 sitzen läßt. Ohne ein Verschieben des Ringes 68 kann die Nabe 12 nicht mehr von der Lenkwelle 14 abgezogen werden. Ein unbeabsichtigtes Lösen des Ringes 68 auf der äußeren Mantelfläche ist aufgrund der auf den Ring 68 durch die Feder 70 ausgeübten axialen Kraft ausgeschlossen.

## Patentansprüche

1. Befestigungsvorrichtung zur Arretierung einer Nabe (12) eines Fahrzeuglenkrads an einem Ende einer Lenkwelle (14),
mit einer drehfesten Welle/Nabe-Verbindung zwischen der Nabe (12) und dem Ende der Lenkwelle (14) und
mit einem ringförmigen Federelement (28), welches eine in der Richtung der Längsachse der Lenkwelle (14) wirksame Formschlußverbindung zwischen der Nabe (12) und der Lenkwelle (14) bildet,
wobei die Lenkwelle (14) einen Absatz aufweist, dessen dem Lenkrad abgewandte Stirnfläche in einen kleineren Wellendurchmesser übergeht,
dadurch gekennzeichnet, daß das Federelement (28) einen gegenüber dem Außendurchmesser des Absatzes kleineren Innendurchmesser aufweist, wenigstens auf einem Teil seiner axialen Länge radial nachgiebig ist und zusammen mit der Nabe (12) auf die Lenkwelle (14) gestülpt werden kann und den Absatz hintergreift.

2. Befestigungsvorrichtung nach Anspruch 1, dadurch gekennzeichnet, daß eine rückseitige Kegelfläche (16) vorgesehen ist, die durch die dem Lenkrad abgewandte Stirnfläche des Absatzes gebildet ist, und daß das Federelement (28) mit einer an ihm vorgesehenen entsprechenden Kegelfläche (29; 52) an der rückseitigen Kegelfläche (16) zur Erzeugung einer axialen Kraft radial vorgespannt anliegt.

3. Befestigungsvorrichtung nach Anspruch 2, dadurch gekennzeichnet, daß die Lenkwelle (14) eine, dem Lenkrad zugewandte, vorderseitige Kegelfläche (18) und die Nabe (12) eine kegelige Aufnahme aufweist, gegen deren Innenfläche (24) die vorderseitige Kegelfläche (18) durch das Federelement (28) gedrückt wird.

4. Befestigungsvorrichtung nach Anspruch 3, dadurch gekennzeichnet, daß sich die vorderseitige Kegelfläche (18) unmittelbar an die rückseitige Kegelfläche (16) anschließt.

5. Befestigungsvorrichtung nach einem der vorstehenden Ansprüche, dadurch gekennzeichnet, daß die Nabe (12) eine innenseitige Umfangsnut (26) aufweist, in der das als geschlitzter Ring ausgebildete Federelement (28) aufgenommen ist.

6. Befestigungsvorrichtung nach Anspruch 5, dadurch gekennzeichnet, daß Umfangsenden des Federelements (28) zur Reduzierung seines Durchmessers und zur Sicherung des Federelements durch eine Sicherungsschraube (36) aufeinander zu bewegt werden können.

7. Befestigungsvorrichtung nach Anspruch 6, dadurch gekennzeichnet, daß die beiden Umfangsenden radial nach außen vorstehende Fortsätze (40) aufweisen, die sich zu einem Konus ergänzen, und daß die in einem sich im wesentlichen in radialer Richtung erstreckenden Gewinde in der Nabe (12) eingedrehte Sicherungsschraube (36) eine konisch ausgehöhlte Stirnseite aufweist, die die Fortsätze (40) aufnimmt und sie beim Eindrehen der Sicherungsschraube (36) aufeinander zu bewegt.

8. Befestigungsvorrichtung nach einem der Ansprüche 1 bis 4, dadurch gekennzeichnet, daß ein Aufnahmeende der Nabe (12), mit dem die Nabe (12) auf die Lenkwelle (16) gesteckt wird, als Federelement (48) ausgebildet ist und daß die Nabe (12) am Aufnahmeende wenigstens einen radial durchgehenden Schlitz (50) zur Erzeugung der radialen Nachgiebigkeit aufweist.

9. Befestigungsvorrichtung nach Anspruch 8, dadurch gekennzeichnet, daß ein Sicherungselement die äußere Mantelfläche der Nabe (12) im Bereich des dem Lenkrad abgewandten Endes umgibt und eine radial nach innen gerichtete Kraft erzeugt.

10. Befestigungsvorrichtung nach Anspruch 9, dadurch gekennzeichnet, daß das Sicherungselement als Drehring (53) mit einer nicht kreiszylindrischen Innenoberfläche (54) ausgebildet ist, daß das Aufnahmeende der Nabe (12) eine nicht kreiszylindrische äußere Mantelfläche (56) aufweist und daß durch Drehen des Sicherungselements die radial nach innen gerichtete Kraft erzeugt werden kann.

11. Befestigungsvorrichtung nach Anspruch 8 oder 9, dadurch gekennzeichnet, daß das Sicherungselement eine Schelle (62) ist.

12. Befestigungsvorrichtung nach Anspruch 8 oder 9, dadurch gekennzeichnet, daß das Sicherungselement ein als auf der äußeren Mantelfläche der Nabe (12) axial verschiebbarer Ring (68) ausgebildet ist, daß sich die äußere Mantelfläche wenigstens in montiertem Zustand des Lenkrads zu dem Aufnahmeende (12) hin konisch geringfügig aufweitet und daß der Ring (68) durch Verschieben zum Aufnahmeende der Nabe (12) hin bestrebt ist, die Nabe (12) radial zusammenzudrücken.

13. Befestigungsvorrichtung nach Anspruch 12, dadurch gekennzeichnet, daß der Ring (68) durch ein Vorspannelement (70) in Richtung zu dem Aufnahmeende der Nabe (12) hin belastet ist.
